**Europäisches Patentamt**

**European Patent Office**

**Office européen des brevets**

(19)

(11) Veröffentlichungsnummer: **0 341 482 B1**

(12) # EUROPÄISCHE PATENTSCHRIFT

(45) Veröffentlichungstag der Patentschrift:
11.12.91 Patentblatt 91/50

(51) Int. Cl.⁵: **G01K 7/00, H02H 5/04**

(21) Anmeldenummer: **89107408.0**

(22) Anmeldetag: **24.04.89**

(54) **Schaltungsanordnung zum Erfassen der Übertemperatur eines Halbleiterbauelements.**

(30) Priorität: **11.05.88 DE 3816259**

(43) Veröffentlichungstag der Anmeldung:
**15.11.89 Patentblatt 89/46**

(45) Bekanntmachung des Hinweises auf die
Patenterteilung:
**11.12.91 Patentblatt 91/50**

(84) Benannte Vertragsstaaten:
**DE FR GB IT**

(56) Entgegenhaltungen:
**EP-A- 0 240 807**
**US-A- 4 667 265**

(73) Patentinhaber: **SIEMENS
AKTIENGESELLSCHAFT
Wittelsbacherplatz 2
W-8000 München 2 (DE)**

(72) Erfinder: **Leipold, Ludwig, Dipl.-Ing.
Strassberger Strasse 125
W-8000 München 40 (DE)**
Erfinder: **Sander, Rainald, Dipl.-Phys.
Karl-Theodor-Strasse 25
W-8000 München 40 (DE)**
Erfinder: **Tihanyi, Jenö, Dr.
Windeckstrasse 1d
W-8000 München 70 (DE)**
Erfinder: **Weber, Roland, Dipl.-Ing.
Ursulastr. 5
W-8000 München 40 (DE)**

## Beschreibung

Die Erfindung betrifft eine Schaltungsanordnung zum Erfassen des Überschreitens einer vorgegebenen Temperatur eines Halbleiterbauelements, mit einem mit dem Halbleiterbauelement thermisch verbundenen Bipolartransistor und mit einer dem Bipolartransistor in Reihe geschalteten Stromquelle.

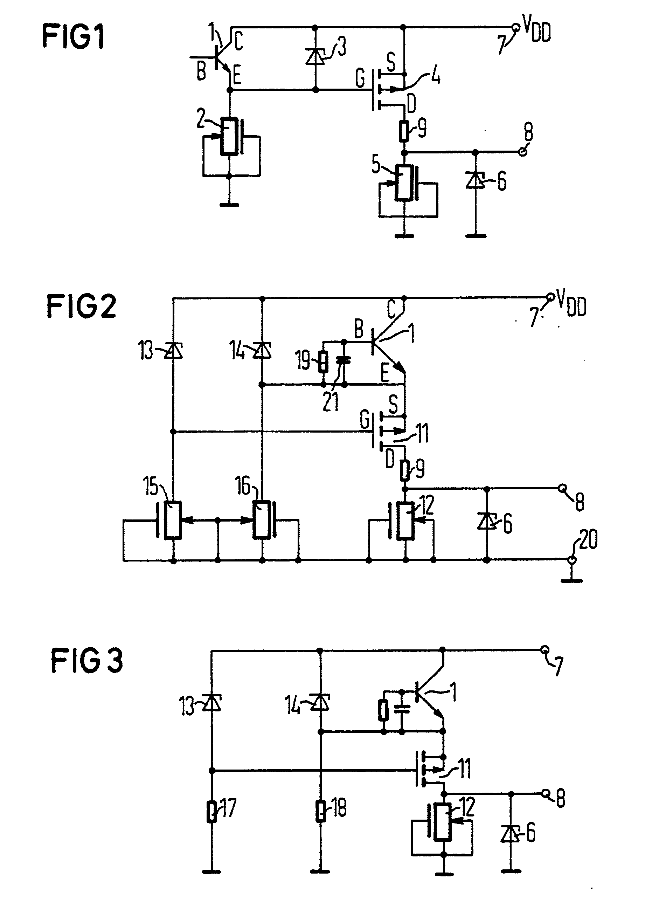

Eine solche Schaltungsanordnung ist aus EP-A-240807 bekannt. Sie wird anhand der FIG 1 erläutert.

Die genannte Schaltung weist einen Bipolartransistor 1 auf, dem eine Stromquelle 2 in Reihe geschaltet ist. Der Bipolartransistor ist mit dem auf Übertemperatur zu überwachenden Halbleiterbauelement, z.B. einem Leistungs-MOSFET oder einem Leistungs-IC thermisch verbunden. Als Stromquelle ist hier ein n-Kanal Depletion-Transistor verwendet. Zur Begrenzung der Kollektor-Emitterspannung des Bipolartransistors ist dieser eine Zenerdiode 3 parallel geschaltet. Der Reihenschaltung aus Bipolartransistor 1 und Stromquelle 2 ist die Reihenschaltung aus einem MOSFET 4, einem Widerstand 9 und einer weiteren Stromquelle 5 parallel geschaltet. Dabei ist der Kollektoranschluß C des Bipolartransistors 1 mit dem Sourceanschluß S des MOSFET 4 verbunden. Der Gateanschluß G des MOSFET 4 ist mit dem Emitteranschluß E des Bipolartransistors verbunden. Der Stromquelle 5, die ebenfalls als n-Kanal Depletion-Transistor ausgebildet sein kann, kann eine Zenerdiode 6 parallel geschaltet sein. Der Widerstand 9 ist im allgemeinen der Durchlaßwiderstand des MOSFET 4.

Wird die Betriebsspannung $V_{DD}$ zwischen der Klemme 7 und Masse angelegt, so fließt im kalten Zustand des zu überwachenden Halbleiterbauelements und damit im kalten Zustand des mit diesem thermisch verbundenen Bipolartransistors 1 ein geringer Strom. Dabei ist der Bipolartransistor 1 und die Stromquelle 2 so dimensioniert, daß der unterhalb der kritischen Temperatur durch den Bipolartransistor fließende Strom kleiner ist als der eingeprägte Strom der Stromquelle 2. Der Gateanschluß G des p-Kanal-MOSFET 4 ist damit negativ gegenüber der Betriebsspannung $V_{DD}$ vorgespannt, er ist daher leitend. Die Gate-Sourcespannung des MOSFET 4 wird durch die Zenerdiode 3 begrenzt. Der leitende MOSFET zieht einen Strom, dessen Höhe durch den eingeprägten Strom der Stromquelle 5 und den Widerstand 9 bestimmt ist.

Steigt die Temperatur des zu überwachenden Halbleiterbauelements und damit des Bipolartransistors 1 an, so erhöht sich der Strom durch den Bipolartransistor. Wird beim Erreichen der kritischen Temperatur der Strom durch den Bipolartransistor größer als der Strom durch die Stromquelle 2, so erhöht sich deren Widerstand sprungartig und das Potential am Emitter des Bipolartransistors und damit am Gateanschluß des MOSFET 4 erhöht sich auf einen Wert, der nahe an der Betriebsspannung liegt. Damit wird der MOSFET 4 ausgeschaltet und die Spannung an der Ausgangsklemme 8 geht auf einen Wert nahe Massepotential. Dieses Signal kann als Übertemperatursignal detektiert werden.

Der Ruhestrom dieser Schaltungsanordnung setzt sich zusammen aus dem durch den Bipolartransistor 1 und dem durch den MOSFET 4 fließenden Strom. Er kann z.B. einige 10µA betragen. Für viele Anwendungszwecke, z.B. für Kraftfahrzeuge, ist ein solch hoher Ruhestrom jedoch unerwünscht.

Das Ziel der Erfindung ist es, eine Schaltungsanordnung der beschriebenen Gattung so weiterzubilden, daß der Ruhestrom drastisch abgesenkt werden kann.

Dieses Ziel wird erreicht durch die Merkmale:
a) Zwischen dem Bipolartransistor und der Stromquelle ist die Source-Drainstrecke eines MOSFET angeschlossen,
b) der Sourceanschluß des MOSFET ist mit dem Emitteranschluß des Bipolartransistors verbunden,
c) der Gateanschluß des MOSFET wird über eine erste Zenerdiode auf einem ersten festen Potential gehalten,
d) der Sourceanschluß des MOSFET wird über eine zweite Zenerdiode auf einem zweiten festen Potential gehalten,
e) die genannten Potentiale sind derart aufeinander abgestimmt, daß ihre Differenz bei Normaltemperatur des Halbleiterbauelements kleiner als die Einsatzspannung des MOSFET ist.

Weiterbildungen sind Gegenstand der Unteransprüche. Die Erfindung wird anhand zweier Ausführungsbeispiele in Verbindung mit den FIG 2 und 3 näher erläutert. Dabei sind gleiche oder funktionsgleiche Teile wie in FIG 1 mit gleichen Bezugszeichen versehen.

Dem npn-Bipolartransistor 1 ist ein p-Kanal-MOSFET 11, ein Widerstand 9 und eine Stromquelle 12 in Reihe geschaltet. Der Widerstand 9 ist im allgemeinen der Durchlaßwiderstand des MOSFET 11. Dabei ist der Sourceanschluß S des MOSFET 11 mit dem Emitteranschluß E des Bipolartransistors 1 verbunden. Der Kollektoranschluß C liegt über die Klemme 7 an der Betriebsspannung $V_{DD}$. Der Gateanschluß G des MOSFET 11 wird über eine erste Zenerdiode 13 auf einem ersten, festen Potential gehalten. Sein Sourceanschluß und der Emitteranschluß des Bipolartransistors 1 wird über eine zweite Zenerdiode 14 auf einem zweiten, festen Potential gehalten. Den Zenerdioden 13, 14 ist anodenseitig je eine Stromquelle 15, 16 in Reihe geschaltet. Beide Reihenschaltungen liegen an der Betriebsspannung $V_{DD}$. Die Zenerspannungen sind einander gleich.

Bei Normaltemperatur fließt ein geringer Strom durch den Bipolartransistor 1. Dessen Emitterpotential bzw. das Sourcepotential des MOSFET 11 wird durch die Zenerspannung der Zenerdiode 14 bestimmt. Das Gatepotential des MOSFET 11 wird durch die Zenerspannung der Zenerdiode 13 bestimmt. Sind beide Zenerspannungen gleich, ist die Gate-Sourcespannung des MOSFET 11 gleich Null und dieser ist gesperrt. Das Potential am Ausgang 8 liegt dabei in der Nähe des Massepotentials.

Wird der Bipolartransistor 1 erwärmt, so steigt sein Strom und sein Emitterpotential bzw. das Sourcepotential des MOSFET steigt in Richtung auf die Versorgungsspannung $V_{DD}$ an, während das Gatepotential durch die Zenerdiode 13 konstant gehalten wird. Erreicht die Gate-Sourcespannung $U_{GS}$ die Einsatzspannung, so wird der MOSFET 11 leitend. Damit kann ein Strom von der Klemme 7 nach Masse fließen, dessen Höhe von der Aussteuerung des Bipolartransistors und vom Widerstand 9 bestimmt ist. Wird dieser Strom gleich dem eingeprägten Strom der Stromquelle 12, so erhöht sich die Spannung an der Stromquelle 12 und damit an den Ausgangsklemmen 8 und 20 sprungartig. Dieses Signal kann als Übertemperatursignal detektiert werden.

Die Stromquellen 15 und 16 können derart dimensioniert werden, daß der Ruhestrom durch den Bipolartransistor 1 und die Sperrströme durch die Zenerdioden 13 und 14 unterhalb von 1μA liegt.

Zwischen dem Basisanschluß B und seinem Emitteranschluß E des Bipolartransistors 1 kann ein Widerstand 19 angeschlossen werden. Durch entsprechende Bemessung dieses Widerstandes kann die Schalttemperatur der Anordnung definiert eingestellt werden. Zusätzlich kann dem Widerstand 19 ein Kondensator 21 parallel geschaltet werden, der von der Versorgungsspannungsquelle stammende Störspannungen weitgehend unschädlich macht.

In FIG 2 ist der Zenerstrom durch die Stromquellen 15 und 16 begrenzt. Anstelle der Stromquellen 15, 16 kann den Zenerdioden 13 und 14 anodenseitig auch je ein Widerstand 17, 18 in Reihe geschaltet werden (FIG 3). Diese sind dann ebenfalls so dimensioniert, daß der Zenerstrom, der neben dem durch den kalten Bipolartransistor 1 fließenden Strom den Ruhestrom der Anordnung darstellt, sehr klein gehalten werden kann.

In den Ausführungsbeispielen liegen die Zenerdioden an $V_{DD}$. Sie können auch an einem von $V_{DD}$ verschiedenen Potential oder jeweils an einem anderen, von $V_{DD}$ verschiedenen Potential liegen. Ihre Zenerspannungen sind dann so auszuwählen, daß $U_{GS}$ im kalten Zustand kleiner als die Einsatzspannung ist. Für eine negative Versorgungsspannung sind die Transistoren durch solche des inversen Leitungstyps zu ersetzen.

## Patentansprüche

1. Schaltungsanordnung zum Erfassen des Überschreitens einer vorgegebenen Temperatur eines Halbleiterbauelements, mit einem mit dem Halbleiterbauelement thermisch verbundenen Bipolartransistor, und mit einer den Bipolartransistor in Reihe geschalteten Stromquelle, **gekennzeichnet durch die Merkmale :**

a) zwischen dem Bipolartransistor (1) und der Stromquelle (12) ist die Source-Drainstrecke eines MOSFET (11) angeschlossen,

b) der Sourceanschluß (S) des MOSFET mit dem Emitteranschluß (E) des Bipolartransistors verbunden,

c) der Gateanschluß (G) des MOSFET wird über eine erste Zenerdiode (13) auf einem ersten festen Potential gehalten,

d) der Sourceanschluß des MOSFET wird über eine zweite Zenerdiode (14) auf einem zweiten festen Potential gehalten,

e) die genannten Potentiale sind derart aufeinander abgestimmt, daß ihre Differenz bei Normaltemperatur des Halbleiterbauelements kleiner als die Einsatzspannung des MOSFET ist.

2. Schaltungsanordnung nach Anspruch 1, **dadurch gekennzeichnet,** daß den Zenerdioden (13, 14) anodenseitig je ein Widerstand (17, 18) in Reihe geschaltet ist und daß die Reihenschaltungen an einer festen Spannung liegen.

3. Schaltungsanordnung nach Anspruch 1, **dadurch gekennzeichnet,** daß den Zenerdioden (17, 18) anodenseitig je eine weitere Stromquelle (15, 16) in Reihe geschaltet ist und daß die Reihenschaltungen an einer festen Spannung liegen.

4. Schaltungsanordnung nach Anspruch 1, **dadurch gekennzeichnet,** daß die Zenerdioden (17, 18) kathodenseitig mit dem Kollektoranschluß (C) des Bipolartransistors (1) verbunden sind und daß ihre Zenerspannungen einander gleich sind.

5. Schaltungsanordnung nach einem der Ansprüche 1 bis 4, **dadurch gekennzeichnet,** daß der Basis-Emitterstrecke des Bipolartransistors (1) ein Widerstand (19) parallel geschaltet ist.

6. Schaltungsanordnung nach einem der Ansprüche 1 bis 4, **dadurch gekennzeichnet,** daß der Basis-Emitterstrecke des Bipolartransistors ein Kondensator (21) parallel geschaltet ist.

## Claims

1. Circuit arrangement for detecting that a semiconductor has exceeded a pre-determined temperature, having a bipolar transistor which is thermally connected to the semiconductor element and having a current source connected in series with the bipolar transistor, characterised by the following features :

a) the source-drain junction of a MOSFET (11) is connected between the bipolar transistor (1) and the current source (12),

b) the source terminal (S) of the MOSFET is connected to the emitter terminal (E) of the bipolar transistor.

c) the gate terminal (G) of the MOSFET is held at a first fixed potential via a first zener diode (13),

d) the source terminal of the MOSFET is held at a second fixed potential via a second zener diode (14),

e) the said potentials are aligned with respect to each other such that their difference is less than the operating voltage of the MOSFET when the semiconductor element is at a normal temperature.

2. Circuit arrangement according to Claim 1, characterised in that a resistor (17, 18) is connected in each case in series with the anode side of the zener diodes (13, 14) and in that the series circuits are at a fixed potential.

3. Circuit arrangement according to Claim 1, characterised in that a further current source (15, 16) is connected in each case in series with the anode side of the zener diodes (13, 14) and in that the series circuits are at a fixed potential.

4. Circuit arrangement according to Claim 1, characterised in that the zener diodes (13, 14) are connected on the cathode side to the collector terminal (C) of the bipolar transistor, and in that their zener voltages are equal to each other.

5. Circuit arrangement according to one of Claims 1 to 4, characterised in that a resistor (19) is connected in parallel with the base-emitter junction of the bipolar transistor (1).

6. Circuit arrangement according to one of Claims 1 to 4, characterised in that a capacitor (21) is connected in parallel with the base-emitter junction of the bipolar transistor.


## Revendications

1. Montage pour détecter le dépassement d'une température prédéterminée d'un composant à semiconducteurs, comportant un transistor bipolaire relié thermiquement au composant à semiconducteurs, et une source de courant branchée en série avec le transistor bipolaire, remarquable par les caractéristiques

a) la voie source-drain d'un transistor MOSFET (11) est branchée entre le transistor bipolaire (1) et la source de courant (12),

b) la borne de source (5) du transistor MOSFET est raccordée à la borne d'émetteur (E) du transistor bipolaire ;

c) la borne de grille (G) du transistor MOSFET est maintenue par l'intermédiaire d'une première diode Zener (13) à un premier potentiel fixe,

d) la borne de source du transistor MOSFET est maintenue par l'intermédiaire d'une seconde diode Zener (14) à un second potentiel fixe,

e) lesdits potentiels sont réglés l'un sur l'autre de manière que leur différence soit inférieure à la tension de déclenchement du transistor MOSFET, lorsque le composant à semiconducteurs fonctionne à la température normale.

2. Montage suivant la revendication 1, caractérisée par le fait qu'une résistance (17, 18) est branchée respectivement en série, côté anode, avec les diodes Zener (13, 14) et que les circuits série sont placés à une tension fixe.

3. Montage suivant la revendication 1, caractérisé par le fait que respectivement une autre source de courant (15, 16) est branchée en série, côté anode, avec les diodes Zener (17, 18) et que les circuits série sont placés à une tension fixe.

4. Montage suivant la revendication 1, caractérisé par le fait que les diodes Zener (17, 18) sont raccordées, côté cathode, à la borne de collecteur (C) du transistor bipolaire (1) et que leurs tensions de Zener sont identiques.

5. Montage suivant l'une des revendications 1 à 4, caractérisé par le fait qu'une résistance (19) est branchée en parallèle avec la voie base-émetteur du transistor bipolaire (1).

6. Montage suivant l'une des revendications 1 à 4, caractérisé par le fait qu'un condensateur (21) est branché en parallèle avec la voie base-émetteur du transistor bipolaire.

FIG1

FIG2

FIG 3